(19) Europäisches Patentamt / European Patent Office / Office européen des brevets

(11) **EP 1 711 381 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(51) Int Cl.:
***B60R 21/16*** (2006.01)

(21) Anmeldenummer: 05714891.8

(22) Anmeldetag: **20.01.2005**

(86) Internationale Anmeldenummer:
**PCT/DE2005/000086**

(87) Internationale Veröffentlichungsnummer:
**WO 2005/070729 (04.08.2005 Gazette 2005/31)**

(54) **SEITENSCHUTZEINRICHTUNG**

SIDE PROTECTION DEVICE

DISPOSITIF DE PROTECTION LATERALE

(84) Benannte Vertragsstaaten:
**DE FR GB SE**

(30) Priorität: **23.01.2004 DE 102004004544
13.04.2004 DE 102004018665**

(43) Veröffentlichungstag der Anmeldung:
**18.10.2006 Patentblatt 2006/42**

(60) Teilanmeldung:
**10182008.2 / 2 269 877**

(73) Patentinhaber: **TAKATA - PETRI AG**
**63743 Aschaffenburg (DE)**

(72) Erfinder:
• **FELLER, Jens**
**89171 Illerkirchberg (DE)**

• **HEUSCHMID, Rainer**
**89075 Ulm (DE)**
• **SIEVERS, Thomas**
**89081 Ulm (DE)**
• **RASCH, Georg**
**89346 Bibertal-Bühl (DE)**

(74) Vertreter: **Baumgärtel, Gunnar et al**
**Patentanwälte Maikowski & Ninnemann**
**Postfach 15 09 20**
**10671 Berlin (DE)**

(56) Entgegenhaltungen:
DE-A1- 10 032 791    DE-A1- 19 633 883
DE-U1- 20 000 144    DE-U1- 29 804 005
DE-U1- 29 906 477    US-A1- 2004 012 179

EP 1 711 381 B1

**Beschreibung**

Die Erfindung bezieht sich auf eine Insassen-Seitenschutzeinrichtung, insbesondere für ein Kraftfahrzeug, mit den Merkmalen gemäß dem Oberbegriff des Anspruchs 1.

Eine Insassen-Seitenschutzeinrichtung ist beispielsweise aus der US-Patentschrift 6,695,340 B2 bekannt. Diese vorbekannte Insassen-Seitenschutzeinrichtung weist zum Schutz eines Fahrzeuginsassen einen Gasgenerator auf, der im Unfallfall einen Seitenairbag der Insassen-Seitenschutzeinrichtung aufbläst. Der Seitenairbag deckt im entfalteten Zustand einen Seitenwandabschnitt des Fahrzeugs ab, wodurch ein Aufschlagen des Fahrzeuginsassen, insbesondere des Kopfes des Fahrzeuginsassen, auf den Seitenwandabschnitt verhindert wird. Der Airbag weist neben seiner den Seitenwandabschnitt abdeckenden Hauptkammer bzw. Nutzkammer fingerähnliche Vorsprünge auf, die dazu dienen sollen, ein Wegbiegen der Hauptkammer von der Seitenwand zu verhindern.

Eine Insassenschutzeinrichtung mit Merkmalen des Anspruchs 1 ist aus der US-Offenlegungsschrift US 2004/0012179 A1 bekannt. Bei dieser Insassenschutzeinrichtung wird das Aufblasverhaltens eines Airbags gesteuert, indem Abströmöffnungen mit Steuerbändern - durch eine Steuereinrichtung gesteuert - geöffnet oder verschlossen werden.

Die DE 100 20 729 A1 offenbart eine Insassenschutzeinrichtung gemäß dem Oberbegriff des Anspruchs 1.

Der Erfindung liegt die Aufgabe zugrunde, eine Seitenschutzeinrichtung anzugeben, die ein besonders großes Maß an Sicherheit für den zu schützenden Fahrzeuginsassen bietet.

Diese Aufgabe wird ausgehend von einer Seitenschutzeinrichtung der eingangs angegebenen Art erfindungsgemäß durch die kennzeichnenden Merkmale des Anspruchs 1 gelöst. Vorteilhafte Ausgestaltungen der Erfindung sind in Unteransprüchen angegeben.

Danach ist vorgesehen, dass der Seitenairbag eine Abströmöffnung, aus der Gas aus dem Seitenairbag nach außen dringen kann, aufweist.

Erfindungsgemäß wird der Seitenairbag nach dem Auslösen der Insassen-Seitenschutzeinrichtung seitlich neben dem Fahrzeuginsassen derart aufgeblasen und positioniert, dass die Abströmöffnung körpergrößenabhängig in Abhängigkeit von der Schulterhöhe des Fahrzeuginsassen verschlossen oder teilweise verschlossen wird oder unverschlossen bleibt.

Ein wesentlicher Vorteil der erfindungsgemäßen Insassen-Seitenschutzeinrichtung besteht darin, dass bei dieser eine fahrzeuginsassenindividuelle Einstellung des Aufblasverhaltens des Seitenairbags erfolgt. Dadurch wird eine optimale Positionierung des Seitenairbags und damit einhergehend eine bestmögliche Schutzwirkung des Seitenairbags sichergestellt.

Vorzugsweise wird der Seitenairbag derart zwischen dem Fahrzeuginsassen und einer intrudierenden Seitenwand des Fahrzeugs positioniert, dass der Seitenairbag vor der intrudierenden Seitenwand und/oder einem mit der intrudierenden Seitenwand in Verbindung stehenden Objekt des Fahrzeugs unmittelbar schützt. Alternativ oder zusätzlich kann der Seitenairbag auch vor anderen Gefahren schützen, beispielsweise vor anderen fahrzeugeigenen Objekten, vor fahrzeugfremden Objekten, insbesondere Teilen eines anderen am Unfall beteiligten Fahrzeugs, vor anderen Insassen des eigenen Fahrzeugs oder auch vor Insassen eines anderen am Unfall beteiligten Fahrzeugs.

Wie bereits erwähnt, wird erfindungsgemäß anhand der Schulterhöhe des Fahrzeuginsassen festgelegt, ob der Fahrzeuginsasse größer oder kleiner als eine vorgegebene Mindestgröße ist. Vorzugsweise erfolgt ein Verschließen oder Drosseln der Abströmöffnung durch den Schulterbereich oder den Oberarmbereich des Fahrzeuginsassen. Bevorzugt ist die Abströmöffnung derart angeordnet, dass es zu einem Verschließen oder Drosseln der Öffnung durch ein Abklemmen oder Abdecken der Öffnung zwischen der Schulter oder dem Oberarmbereich des Fahrzeuginsassen und der intrudierenden Seitenwand kommt.

Um eine mehrstufige Einstellung des Gasdrucks des Seitenairbags in Abhängigkeit von der Insassengröße zu erreichen, kann eine Mehrzahl an Abströmöffnungen im Seitenairbag angeordnet sein.

Vorzugsweise steht mit der Abströmöffnung ein Abströmkanal in Verbindung, der das durch die Abströmöffnung austretende Gas vom Fahrzeuginsassen weglenkt. Verletzungen durch heiße Gase, die aus dem Airbag austreten, können durch den Abströmkanal verhindert werden. Der Abströmkanal kann beispielsweise durch ein Abdeckelement gebildet sein, das zwischen dem Fahrzeuginsassen und der Abströmöffnung angeordnet ist.

Vorzugsweise ist der Abströmkanal allen Abströmöffnungen des Seitenairbags zugeordnet, um ein gefahrloses Wegleiten des gesamten austretenden Gases zu erreichen. Alternativ kann allen Abströmöffnungen des Seitenairbags jeweils individuell ein Abströmkanal zugeordnet sein, der das aus der jeweiligen Abströmöffnung austretende Gas vom Fahrzeuginsassen weglenkt.

Um einen Schutz des Oberkörpers des zu schützenden Insassen zu erreichen, weist der Seiten-Airbag bevorzugt eine Thoraxkammer auf; im oberen Bereich der Thoraxkammer ist beispielsweise die erwähnte Abströmöffnung angeordnet.

Der Seiten-Airbag kann beispielsweise im Türbereich des Fahrzeugs oder im Bereich des Fahrzeugsitzes angeordnet sein.

Die Erfindung wird nachfolgend anhand von Ausführungsbeispielen erläutert, dabei zeigen:

Figuren 1 bis 3      ein erstes Ausführungsbeispiel einer erfindungsgemäßen Insassenschutzeinrichtung mit einer Abströmöffnung ohne Abdeckelement,

Figuren 4 bis 7    ein zweites Ausführungsbeispiel einer erfindungsgemäßen Insassenschutzeinrichtung mit einer Abströmöffnung mit einem Abdeckelement, und

Figuren 8 bis 11    zur allgemeinen Erläuterung ein Ausführungsbeispiel einer Insassenschutzeinrichtung mit einer Überströmöffnung zwischen zwei Kammern eines Seitenairbags.

In den Figuren werden für vergleichbare oder identische Komponenten dieselben Bezugszeichen verwendet.

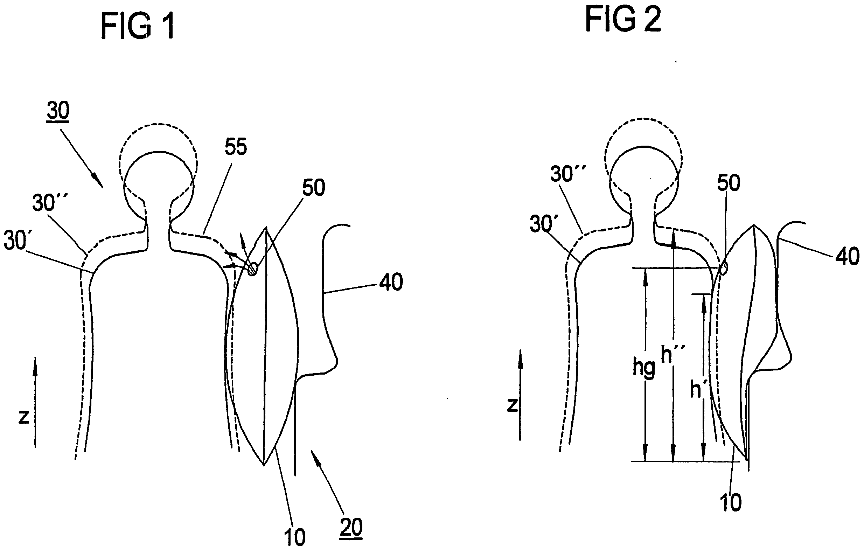

In der Figur 1 erkennt man einen unfallbedingt bereits aufgeblasenen Seitenairbag 10 einer im Übrigen nicht weiter im Detail dargestellten Insassenschutzeinrichtung 20. Die Insassenschutzeinrichtung 20 weist eine nicht dargestellte Steuereinrichtung auf, die im Falle eines Unfalls einen in der Figur 1 ebenfalls nicht dargestellten Gasgenerator zündet, mit dem der Seitenairbag 10 aufgeblasen wird.

Der Seitenairbag 10 ist beispielhaft zwischen einem Fahrzeuginsassen 30 und einer Fahrzeugwand 40 - z. B. einer Seitenwand bzw. Fahrzeugtür - angeordnet. Alternativ könnte der Seitenairbag 10 auch an einer anderen Stelle angeordnet werden.

In der Figur 1 sind für den Fahrzeuginsassen 30 zwei unterschiedliche Körpergrößen dargestellt: Ein "kleiner" Fahrzeuginsasse ist mit einer durchgezogenen Linie gezeichnet und trägt das Bezugszeichen 30'. Mit einer gestrichelten Linie ist ein "großer" Fahrzeuginsasse dargestellt, der mit dem Bezugszeichen 30" markiert ist.

Der "große" Fahrzeuginsasse 30" weist eine Körpergröße bzw. Insassengröße auf, die über einer vorgegebenen Mindestgröße liegt. Der mit der durchgezogenen Linie dargestellte "kleine" Fahrzeuginsasse 30' weist eine Körpergröße bzw. Insassengröße auf, die kleiner als die vorgegebene Mindestgröße ist.

In der Figur 1 ist erkennbar, dass der Seitenairbag 10 eine Abströmöffnung 50 aufweist, durch die das in den Seitenairbag 10 vom Gasgenerator hineingeblasene Gas den Seitenairbag 10 verlassen kann. In dem in der Figur 1 dargestellten Zustand ist der Fahrzeuginsasse 30 von der Fahrzeugwand 40 noch derart weit entfernt, dass die Abströmöffnung 50 vom Fahrzeuginsassen 30 noch nicht abgedeckt wird. Somit kann Gas aus dem Seitenairbag 10 durch die Abströmöffnung 50 austreten.

In der Figur 2 ist der weitere Unfallverlauf dargestellt, bei dem sich der Fahrzeuginsasse 30 und die Fahrzeugwand 40 näher aufeinander zu bewegt haben. Der Seitenairbag 10 ist nun zwischen dem Fahrzeuginsassen 30 und der Fahrzeugwand 40 eingeklemmt.

Zu unterscheiden ist jetzt, ob es sich um den "kleinen" Fahrzeuginsassen 30' oder um den "großen" Fahrzeuginsassen 30" handelt: Wie in der Figur 2 erkennbar ist, deckt der "große" Fahrzeuginsasse 30" die Abströmöffnung 50 des Seitenairbags 10 mit seiner Schulter 55 vollständig ab, so dass kein Gas durch die Abströmöffnung 50 den Seitenairbag 10 mehr verlassen kann. Der Seitenairbag 10 behält somit seinen Innendruck weitestgehend bei, wodurch eine relativ große Wegdrück- bzw. Auffangkraft auf den "großen" Fahrzeuginsassen 30" ausgeübt wird.

Zu einem vollständigen Abdecken der Abströmöffnung 50 durch den "großen" Fahrzeuginsassen 30" kommt es, weil dessen Schulter 55 eine Schulterhöhe h" aufweist, die größer als eine durch die Anordnung der Abströmöffnung 50 vorgegebene Grenzhöhe hg ist. Es gilt also bei "großen" Fahrzeuginsassen 30":

$$h'' > hg.$$

Im Unterschied dazu deckt der "kleine" Fahrzeuginsasse 30' die Abströmöffnung 50 des Seitenairbags 10 nicht ab, da seine Schulter 55 die Abströmöffnung 50 nicht erreicht, so dass auch zu dem in der Figur 2 dargestellten Unfallzeitpunkt die Abströmöffnung 50 unabgedeckt bleibt. Das Gas kann also weiterhin aus dem Seitenairbag 10 durch die Abströmöffnung 50 austreten, so dass auf den Fahrzeuginsassen 30' eine im Vergleich zum großen Fahrzeuginsassen 30" nur reduzierte Wegdrück- bzw. Auffangkraft einwirkt.

Für die Schulterhöhe h' des "kleinen" Fahrzeuginsassen 30' gilt also:

$$h' < hg.$$

Zusammengefasst lässt sich damit feststellen, dass bei der Insassenschutzeinrichtung gemäß den Figuren 1 und 2 eine Wegdrück- bzw. Auffangkraft durch den Seitenairbag 10 ausgeübt wird, die abhängig von der Insassengröße ist. Konkret wird auf einen "großen" Fahrzeuginsassen 30" eine größere Wegdrück- bzw. Auffangkraft als auf einen "kleinen" Fahrzeuginsassen 30' ausgeübt.

Die Festlegung der eingangs genannten "vorgegebenen Mindestgröße" erfolgt dabei durch die Anordnung der Abströmöffnung 50. Je höher - in z-Richtung des Fahrzeugs gesehen - beispielsweise die Abströmöffnung angeordnet wird, desto größer ist auch die Mindestgröße des Fahrzeuginsassen - beispielsweise also die Schulterhöhe des Fahrzeuginsassen -, die überschritten werden muss, um ein Verschließen der Abströmöffnung 50 und damit einen erhöhten Seitenairbag-Innendruck zu erreichen.

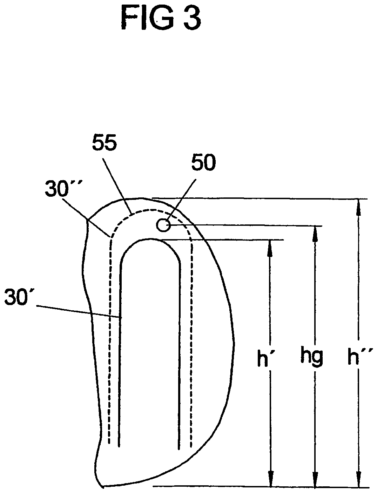

In der Figur 3 ist der Seitenairbag 10 gemäß den Figuren 1 und 2 in einer seitlichen Ansicht gezeigt. Man erkennt die Abströmöffnung 50, durch die das Gas aus dem Seitenairbag 10 abströmen kann. Darüber hinaus sind der Schulterbereich 55 des "großen" Fahrzeugsinsassen 30" mit einer gestrichelten Linie und der Schulterbereich 55 des "kleinen" Fahrzeugsinsassen 30' mit einer durchgezogenen Linie schematisch dargestellt. Man erkennt, dass die Abströmöffnung 50 von der Schulter 55 des "großen" Fahrzeugsinsassen 30" abgedeckt wird, wohingegen sie im Falle des "kleinen" Fahrzeugsinsassen 30' frei bleibt; dies liegt daran, dass die Schulterhöhe h' des Fahrzeugsinsassen 30' nicht ausreicht, um die Abströmöffnung 50 zu verschließen.

In der Figur 3 ist darüber hinaus erkennbar, dass die Abströmöffnung 50 dem Fahrzeugsinsassen 30' bzw. 30" unmittelbar gegenüberliegt, so dass das aus dem Seitenairbag 10 austretende Gas unmittelbar auf den Fahrzeugsinsassen 30' bzw. 30" gelenkt wird. Im Falle eines "Heißgas"-Gasgenerators, der also heiße Gase zum Aufblasen des Seitenairbags 10 produziert, kann ein unmittelbares Ableiten der heißen Gase in Richtung Fahrzeugsinsassen 30' bzw. 30" zu Verletzungen führen.

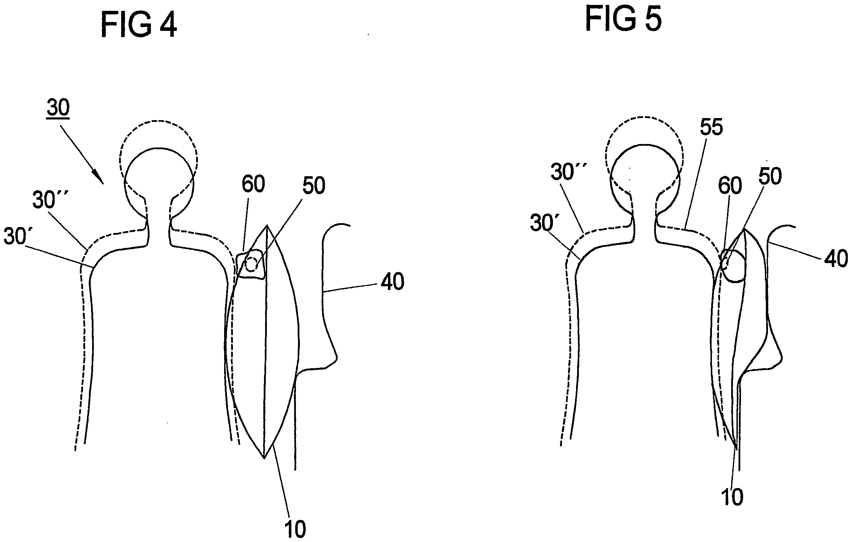

Um solche Verletzungen zu vermeiden, weist bei einem in den Figuren 4 bis 7 dargestellten zweiten Ausführungsbeispiel einer Insassenschutzeinrichtung der Seitenairbag 10 ein Abdeckelement 60 auf, das die Abströmöffnung 50 überdeckt und den durch die Abströmöffnung 50 austretenden Gasstrom derart ablenkt, dass dieser tangential zum Seitenairbag 10 abfließt und nicht unmittelbar auf den Fahrzeugsinsassen trifft.

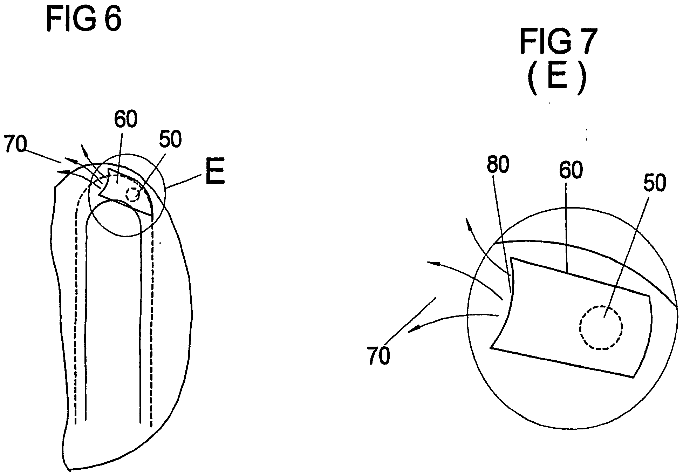

Dieses Ableiten des durch die Abströmöffnung 50 herausströmenden Gasstroms ist in den Figuren 6 und 7 mittels dreier Pfeile mit dem Bezugszeichen 70 dargestellt.

Die Figur 7 zeigt eine Einzelheit E der in der Figur 6 im Detail dargestellten Ausgestaltung des Seitenairbags 10 vergrößert. Man erkennt in der Figur 7 das Abdeckelement 60, das einen Abströmkanal 80 in tangentialer Richtung zur Oberfläche des Seitenairbags 10 bildet, nochmals im Detail.

In den Figuren 4 und 5 ist das Zusammenwirken des Seitenairbags 10 mit dem Fahrzeugsinsassen 30 dargestellt. Man erkennt, dass ein großer Fahrzeugsinsasse 30" mit seiner Schulter 55 das Abdeckelement 60 auf die Abströmöffnung 50 aufdrückt, wodurch die Abströmöffnung 50 verschlossen und ein weiterer Gasaustritt verhindert wird; es bildet sich somit eine "erhöhte" Wegdrück- bzw. Auffangkraft für einen großen Fahrzeugsinsassen.

Im Falle eines kleinen Fahrzeugsinsassen 30' bleibt das Abdeckelement 60 unbetätigt, so dass dauerhaft Gas aus der Abströmöffnung 50 austreten kann und eine nur verminderte Wegdrück- bzw. Auffangkraft erzeugt wird.

Im Zusammenhang mit den beiden Insassenschutzeinrichtungen gemäß den Figuren 1 bis 7 wurde das Abdecken der Abströmöffnung 50 beispielhaft anhand der Schulter 55 des Fahrzeugsinsassen 30 erläutert, wobei "große" und "kleine" Fahrzeugsinsassen anhand ihrer Schulterhöhe h' bzw. h" unterschieden wurden. Selbstverständlich können auch andere Körperteile bzw. Körperproportionen oder Körpermaße herangezogen werden, um zwischen "großen" und "kleinen" Fahrzeugsinsassen zu unterscheiden; beispielsweise kann die Körperbreite bzw. Torsobreite als Maß herangezogen werden, wobei "breite" Fahrzeugsinsassen als "groß" und "schmale" Fahrzeugsinsassen
als "klein" angesehen und behandelt werden.

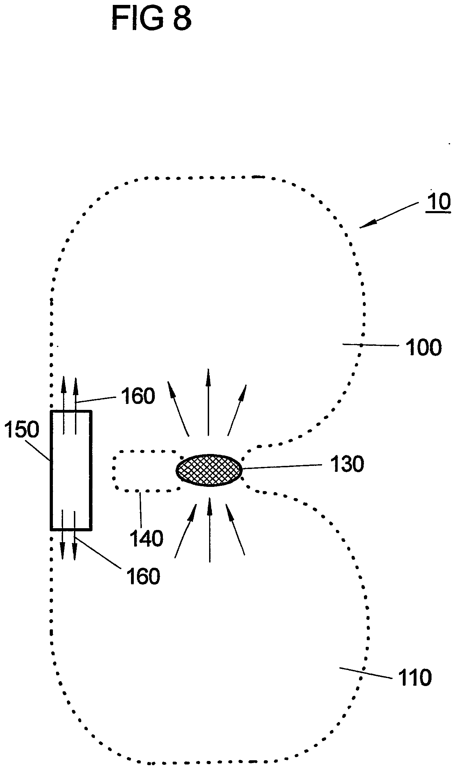

In den Figuren 8 bis 11 ist ein drittes Ausführungsbeispiel der Erfindung gezeigt. Man erkennt in der Figur 8 einen Seitenairbag 10 mit zwei Kammern 100 und 110. Bei der oberen Kammer 100 handelt es sich um eine Kopfkammer, die im Falle eines Unfalls den Kopf des Fahrzeugsinsassen schützt. Die untere Kammer 110 ist eine Thoraxkammer, die eine Schutzwirkung für den Ober- und Unterkörper des Insassen entfaltet.

In der Figur 8 ist darüber hinaus eine Überströmöffnung 130 erkennbar, die einen Gasfluss zwischen den beiden Kammern 100 und 110 ermöglicht. Der Querschnitt bzw. Durchmesser der Überströmöffnung wird durch die Größe und die Positionierung einer Abnaht bestimmt, die mit dem Bezugszeichen 140 gekennzeichnet ist.

Im Falle eines Unfalls wird der Seitenairbag 10 mittels eines Gasgenerators 150 aufgeblasen; der Gasgenerator 150 befüllt dabei sowohl die Kopfkammer 100 als auch die Thoraxkammer 110; dies ist in der Figur 8 mit den Pfeilen 160 angedeutet.

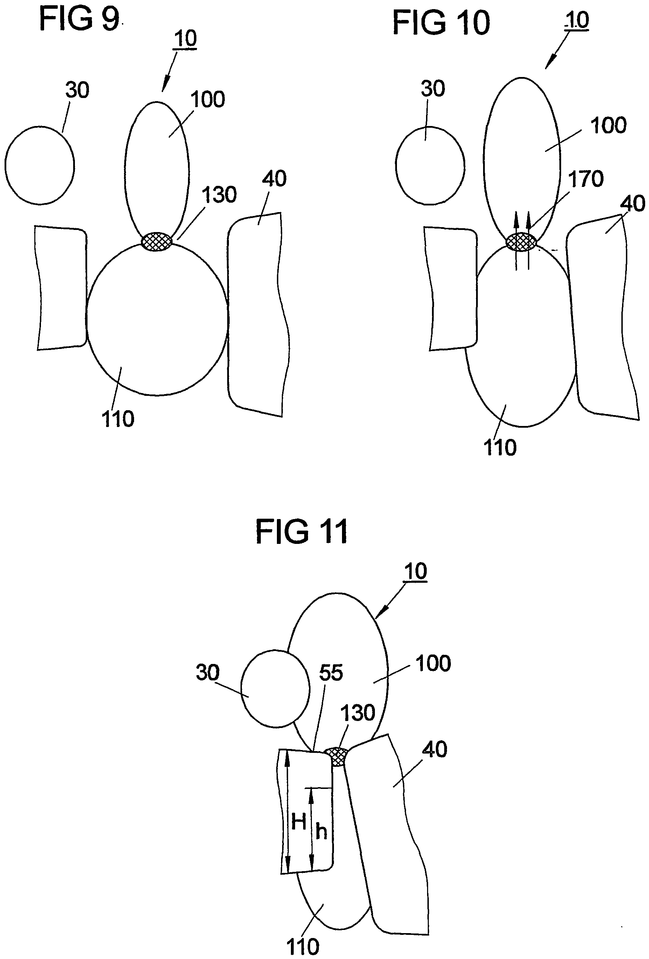

In den Figuren 9 bis 11 ist die Funktionsweise des Seitenairbags 10 im Unfallverlauf gezeigt. Man erkennt in der Figur 9 eine Seitenwand 40, die im Falle eines seitlichen Aufprallunfalls in Richtung auf den Insassen 30 gedrückt wird. Der Seitenairbag 10 ist zu dem in der Figur 9 gezeigten Zeitpunkt bereits aufgeblasen; man erkennt die aufgeblasene Kopfkammer 100 und die aufgeblasene Thoraxkammer 110.

Figur 10 zeigt die Unfallsituation zu einem späteren Zeitpunkt: Man erkennt, dass sich die Seitenwand 40 näher auf den Fahrzeugsinsassen 30 zubewegt hat, wodurch die Thoraxkammer 110 zusammengedrückt wird. Aufgrund dieses Zusammendrückens wird in der Thoraxkammer der Gasdruck erhöht, so dass Gas aus der Thoraxkammer 110 in die Kopfkammer 100 fließt. Der Gasfluss ist durch einen Pfeil 170 angedeutet. Das Volumen der Kopfkammer 100 nimmt dadurch zu, so dass die Schutzwirkung für den Kopf des Insassen erhöht wird.

Im weiteren Unfallverlauf nähert sich die Seitenwand 40 dem Fahrzeugsinsassen 30 noch weiter; dies zeigt die Figur 11. Durch die intrudierende Seitenwand 40 und die Schulter 55 des Fahrzeugsinsassen 30 wird die Überströmöffnung 130 nun zusammengedrückt, so dass der Gasdurchfluss in Richtung Kopfkammer 100 gedrosselt wird. Unter Umständen kommt es zu einem vollständigen Verschließen der Überströmöffnung 130, wenn der Abstand zwischen der Schulter 55 und der Seitenwand 40 zu klein wird.

In der Figur 11 lässt sich erkennen, dass es zu einem Abklemmen der Überströmöffnung 130 nur dann kommen kann, wenn die Schulterhöhe H des Fahrzeuginsassen 30 groß genug ist. Würde die Schulter 55 unter der Überströmöffnung 130 liegen, so käme es zu keiner Drosselung bzw. zu keiner Unterbrechung des Gasdurchflusses durch die Überströmöffnung 130; dies ist in der Figur 11 durch eine gestrichelte Linie angedeutet, die die Schulterhöhe h eines kleinen Fahrzeuginsassen darstellt. Die Insassen-Seitenschutzeinrichtung gemäß den Figuren 8 bis 11 arbeitet also körpergrößenabhängig, indem die Überströmöffnung 130 größenabhängig gedrosselt oder verschlossen wird oder unverschlossen bleibt.

Die erfindungsgemäße körpergrößenabhängige "Airbagentfaltungssteuerung" wurde im Zusammenhang mit den Figuren 1 bis 11 ausschließlich am Beispiel eines Seitenairbags erläutert; selbstverständlich ist eine körpergrößenabhängige, beispielsweise schulterhöhenabhängige, Steuerung des Aufblasverhaltens eines Airbags auch bei allen anderen Typen von Airbags einsetzbar, sei es beispielsweise bei Front-Airbags, Fahrerairbags, Beifahrerairbags, türintegrierten Airbagsystemen, Head-Thorax-Airbags, Head-Seitenairbags, Kneebags, Pelvisbags, Rear-Impact Airbags oder anderen vergleichbaren Airbags.

## Bezugszeichenliste

| | |
|---|---|
| 10 | Seitenairbag |
| 20 | Insassenschutzeinrichtung |
| 30 | Fahrzeuginsasse |
| 30' | kleiner Fahrzeuginsasse |
| 30" | großer Fahrzeuginsasse |
| 40 | Fahrzeugwand |
| 50 | Abströmöffnung |
| 55 | Schulter |
| 60 | Abdeckelement |
| 70 | Gasstrom |
| 80 | Abströmkanal |
| 100 | Kopfkammer |
| 110 | Thoraxkammer |
| 130 | Überströmöffnung |
| 140 | Abnaht |
| 150 | Gasgenerator |
| 160 | Gasfluss |
| 170 | Gasfluss |
| H, h | Schulterhöhe |
| h', h' | Schulterhöhe |
| hg | vorgegebene Mindestgröße |

## Patentansprüche

1. Insassenschutzeinrichtung für ein Fahrzeug mit zumindest einem Seitenairbag (10), der im Falle einer Seitenkollision des Fahrzeugs einen Fahrzeuginsassen (30) schützt, wobei der Seitenairbag (10) eine Abströmöffnung (50) aufweist, aus der Gas aus dem Seitenairbag (10) nach außen dringen kann, wobei der Seitenairbag (10) nach dem Auslösen der Seitenschutzeinrichtung seitlich neben dem Fahrzeuginsassen (30) derart aufgeblasen und positioniert wird, dass die Abströmöffnung (50) körpergrößenabhängig verschlossen oder teilweise verschlossen wird oder unverschlossen bleibt, wobei die Abströmöffnung (50) derart angeordnet ist, dass diese in Abhängigkeit von der Schulterhöhe des Fahrzeuginsassen verschlossen oder teilweise verschlossen wird oder unverschlossen bleibt,
wobei es bei Fahrzeuginsassen (30), deren Schulterhöhe (h") eine vorgegebene Schulterhöhe (hg) überschreitet, zu einem Verschließen oder Drosseln der Öffnung durch ein Abklemmen der Öffnung zwischen der Schulter (55) oder dem Oberarmbereich des Fahrzeuginsassen und der intrudierenden Seitenwand (40) kommt, und
wobei bei Fahrzeuginsassen, deren Schulterhöhe (h') die vorgegebene Mindestgröße (hg) unterschreitet, die Abströmöffnung (50) im Unfallfall geöffnet bleibt,
**dadurch gekennzeichnet, dass**
die Abströmöffnung (50) so angeordnet ist, dass sie bezogen auf den aufgeblasenen Zustand des Seitengassacks (10) dem Fahrzeuginsassen unmittelbar gegenüber liegt, und
mit der Abströmöffnung (50) ein Abströmkanal (80) in Verbindung steht, der das durch die Abströmöffnung (50) austretende Gas vom Fahrzeuginsassen (30) weglenkt.

2. Insassenschutzeinrichtung nach Anspruch 1, **dadurch gekennzeichnet, dass** der Seitenairbag (10) derart zwischen dem Fahrzeuginsassen (30) und einer intrudierenden Seitenwand (40) des Fahrzeugs positioniert wird, dass der Seitenairbag (10) vor fahrzeugeigenen Objekten, vor fahrzeugfremden Objekten, insbesondere vor Teilen eines anderen am Unfall beteiligten Fahrzeugs, oder vor Insassen eines anderen am Unfall beteiligten Fahrzeugs schützt.

3. Insassenschutzeinrichtung nach Anspruch 1 oder 2, **dadurch gekennzeichnet, dass** der Seitenairbag (10) derart zwischen dem Fahrzeuginsassen (30) und einer intrudierenden Seitenwand (40) des Fahrzeugs positioniert wird, dass der Seitenairbag (10) vor der intrudierenden Seitenwand (40) und/oder einem mit der intrudierenden Seitenwand (40) in Verbindung stehenden Objekt des Fahrzeugs unmittelbar schützt.

4. Insassenschutzeinrichtung nach einem der voranstehenden Ansprüche, **dadurch gekennzeichnet, dass** eine Mehrzahl an Abströmöffnungen (50) im Seitenairbag (10) derart angeordnet ist, dass eine mehrstufige Abstufung der Wegdrück- bzw. Auffangkraft in Abhängigkeit von der Insassengröße erreicht wird.

5. Insassenschutzeinrichtung nach einem der vorhergehenden Ansprüche, **dadurch gekennzeichnet, dass** der Abströmkanal (80) durch ein Abdeckelement (60) gebildet ist, das zwischen dem Fahrzeuginsassen (30) und der Abströmöffnung (50) angeordnet ist.

6. Insassenschutzeinrichtung nach einem der vorhergehenden Ansprüche, **dadurch gekennzeichnet, dass** der Abströmkanal zumindest zwei Abströmöffnungen, vorzugsweise allen Abströmöffnungen, des Seitenairbags zugeordnet ist.

7. Insassenschutzeinrichtung nach einem der vorhergehenden Ansprüche, **dadurch gekennzeichnet, dass** allen Abströmöffnungen (50) des Seitenairbags (10) jeweils individuell ein Abströmkanal (80) zugeordnet ist, der das aus der jeweiligen Abströmöffnung austretende Gas vom Fahrzeuginsassen (30') weglenkt.

8. Insassenschutzeinrichtung nach einem der vorangehenden Ansprüche, **dadurch gekennzeichnet, dass** der Seiten-Airbag (10) eine Thoraxkammer (50) aufweist und die Abströmöffnung (50) im oberen Bereich der Thoraxkammer (50) angeordnet ist.

9. Insassenschutzeinrichtung nach einem der vorangehenden Ansprüche, **dadurch gekennzeichnet, dass** der Seiten-Airbag (10) im Türbereich des Fahrzeugs oder am Fahrzeugsitz angeordnet ist.

## Claims

1. An occupant protection device for a vehicle with at least one side airbag (10) which protects a vehicle occupant (30) in the event of a side collision of the vehicle, wherein the side airbag (10) has an outflow opening (50) from which the gas can penetrate to the outside from the side airbag (10), wherein after the side protection device has been triggered, the side airbag (10) is inflated and positioned laterally next to the vehicle occupant (30) in such a manner that the outflow opening (50) is closed or partially closed as a function of body size or remains unclosed, wherein

   the outflow opening (50) is arranged in such a manner that the outflow opening is closed or partially closed or remains unclosed according to the shoulder height of the vehicle occupant,

   wherein in the case of vehicle occupants (30) whose shoulder height (h") exceeds a predetermined shoulder height (hg) a closing or throttling of the opening occurs by the opening being pinched off between the shoulder (55) or the upper arm region of the vehicle occupant and the intruding side wall (40) and wherein in the case of vehicle occupants shoulder height (h') falls short of the predetermined minimum size (hg), the outflow opening (50) remains open in the event of an accident,

   **characterized in that**

   the outflow opening (50) is arranged in such a manner that the outflow opening lies immediately opposite the vehicle occupant in the inflated state of the side airbag (10) and

   an outflow passage (80) is connected to the outflow opening (50) and deflects the gas emerging through the outflow opening (50) away from the vehicle occupant (30).

2. The occupant protection device as claimed in claim 1, **characterized in that** the side airbag (10) is positioned between the vehicle occupant (30) and an intruding side wall (40) of the vehicle in such a manner that the side airbag (10) provides protection from objects integral to the vehicle, from objects external to the vehicle, in particular from parts of another vehicle involved in the accident, or from occupants of another vehicle involved in the accident.

3. The occupant protection device as claimed in claim 1 or 2, **characterized in that** the side airbag (10) is positioned between the vehicle occupant (30) and an intruding side wall (40) of the vehicle in such a manner that the side airbag (10) immediately provides protection from the intruding side wall (40) and/or a vehicle object connected to the intruding side wall (40).

4. The occupant protection device as claimed in one of the preceding claims, **characterized in that** a plurality of outflow openings (50) are arranged in the side airbag (10) in such a manner that a multi-stage graduation of the pushing-away or intercepting force is achieved as a function of the size of the occupant.

5. The occupant protection device as claimed in one of the preceding claims, **characterized in that** the outflow passage (80) is formed by a covering element (60) which is arranged between the vehicle occupant (30) and the outflow opening (50).

6. The occupant protection device as claimed in one of the preceding claims, **characterized in that** the outflow passage is assigned at least to two outflow openings, preferably all of the outflow openings, of the side airbag.

7. The occupant protection device as claimed in one of the preceding claims, **characterized in that** all of the outflow openings (50) of the side airbag (10) are respectively individually assigned an outflow passage (80) which deflects the gas emerging from the respective outflow opening away from the vehicle occupant (30').

8. The occupant protection device as claimed in one of the preceding claims, **characterized in that** the side airbag (10) has a thorax chamber (50) and the outflow opening (50) is arranged in the upper region of the thorax chamber (50).

9. The occupant protection device as claimed in one of the preceding claims, **characterized in that** the side airbag (10) is arranged in the door region of the vehicle or on the vehicle seat.


**Revendications**

1. Système de protection de passager pour un véhicule comprenant au moins un airbag latéral (10) qui, dans le cas d'une collision latérale du véhicule, protège un passager (30) du véhicule, dans lequel l'airbag latéral (10) présente une ouverture d'échappement (50) hors de laquelle le gaz peut s'échapper hors de l'airbag latéral (10) vers l'extérieur, dans lequel l'airbag latéral (10), après déclenchement du système de protection latérale, est gonflé et positionné latéralement à côté du passager (30) du véhicule de telle façon que l'ouverture d'échappement (50) est obturée ou partiellement obturée, ou encore reste non obturée en fonction de la taille corporelle, dans lequel l'ouverture d'échappement (50) est agencée de telle façon que celle-ci est obturée, ou partiellement obturée, ou encore reste non obturée en fonction de la hauteur des épaules du passager du véhicule,

et dans lequel, pour des passagers (30) dont la hauteur des épaules (h") dépasse une hauteur d'épaule prédéterminée (hg), il se produit une obturation ou un étranglement de l'ouverture par pincement de l'ouverture entre l'épaule (55) ou la partie supérieure du bras du passager du véhicule et la paroi latérale (40) rentrante, et

dans lequel, pour des passagers dont la hauteur des épaules (h') passe au-dessous d'une taille minimum prédéterminée (hg), l'ouverture d'échappement (50) reste ouverte dans le cas d'un accident,

**caractérisé en ce que**

l'ouverture d'échappement (50) est agencée de telle façon que, par référence à la situation gonflée du coussin d'airbag latéral (10), elle est directement opposée au passager du véhicule, et

un canal d'échappement (80) communique avec l'ouverture d'échappement (50), lequel dévie le gaz sortant par l'ouverture d'échappement (50) en éloignement du passager du véhicule (30).

2. Système de protection de passager selon la revendication 1, **caractérisé en ce que** l'airbag latéral (10) est positionné entre le passager (30) du véhicule et une paroi latérale (40) rentrante du véhicule de telle façon que l'airbag latéral (10) protège vis-à-vis d'objets propres au véhicule, vis-à-vis d'objets étrangers au véhicule, en particulier de parties d'un autre véhicule impliqué dans l'accident ou vis-à-vis d'occupants d'un autre véhicule impliqué dans l'accident.

3. Système de protection de passager selon la revendication 1 ou 2, **caractérisé en ce que** l'airbag latéral (10) est positionné entre le passager du véhicule (30) et une paroi latérale rentrante (40) du véhicule de telle façon que l'airbag latéral (10) protège directement vis-à-vis de la paroi latérale rentrante (40) et/ou d'un objet du véhicule qui se trouve en liaison avec la paroi latérale rentrante (40).

4. Système de protection de passager selon l'une des revendications précédentes, **caractérisé en ce qu'**il est prévu une pluralité d'ouvertures d'échappement (50) dans l'airbag latéral (10) qui sont agencées de telle façon que l'on obtient une gradation à plusieurs niveaux de la force de repoussement ou d'amortissement en fonction de la taille du passager.

5. Système de protection de passager selon l'une des revendications précédentes, **caractérisé en ce que** le canal d'échappement (80) est formé par un élément de recouvrement (60) qui est agencé entre le passager (30) du véhicule et l'ouverture d'échappement (50).

6. Système de protection de passager selon l'une des revendications précédentes, **caractérisé en ce que** le canal d'échappement est associé à au moins deux ouvertures d'échappement et de préférence toutes les ouvertures d'échappement de l'airbag latéral.

7. Système de protection de passager selon l'une des revendications précédentes, **caractérisé en ce qu'**un canal d'échappement (80) respectif est associé individuellement à toutes les ouvertures d'échappement (50) de l'airbag latéral (10), canal qui dévie le gaz s'échappant hors de l'ouverture d'échappement respectif en éloignement du passager (30') du véhicule.

8. Système de protection de passager selon l'une des revendications précédentes, **caractérisé en ce que** l'airbag latéral (10) comprend une chambre thoracique (50), et l'ouverture d'échappement (50) est agencée dans la région supérieure de la chambre thoracique (50).

9. Système de protection de passager selon l'une des revendications précédentes, **caractérisé en ce que** l'airbag latéral (10) est agencé dans la région de la porte du véhicule ou sur le siège du véhicule.

# FIG 1

# FIG 2

EP 1 711 381 B1

# FIG 3

FIG 5

FIG 4

# FIG 6

70  60  50  E

# FIG 7
( E )

80  60  50
70

EP 1 711 381 B1

# FIG 8

## FIG 9

30
10
100
130
40
110

## FIG 10

30
10
100
170
40
110

## FIG 11

10
30
55
100
130
40
H
h
110

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6695340 B2
- US 20040012179 A1
- DE 10020729 A1